# EUROPÄISCHE PATENTSCHRIFT

(11) **EP 0 630 869 B1**
(45) Veröffentlichungstag und Bekanntmachung des Hinweises auf die Patenterteilung: **29.01.1997**
(21) Anmeldenummer: 94108800.7
(22) Anmeldetag: 08.06.1994
(51) Int. Cl.: C04B 24/18

(54) **Verfahren zur Verringerung von wasserlöslichem CrVI in Zementen und/oder zementhaltigen Zubereitungen.**
Method for reduction of water-soluble CrVI in cement and/or cement-containing mixtures.
Procédé de réduction de CrVI soluble dans l'eau dans les ciments et/ou les mélanges cimenteux.

(30) Priorität: 24.06.1993 DE 4321077
(43) Veröffentlichungstag der Anmeldung: 28.12.1994
(73) Patentinhaber: DYCKERHOFF AKTIENGESELLSCHAFT, D-65203 Wiesbaden (DE)
(72) Erfinder: Rudert, Volkhart, Dr. rer. nat., D-55271 Stadecken-Elsheim (DE); Jung, Michael, Dr. rer. nat., D-65232 Taunusstein (DE); Alter, Gabriela, Dipl.-Chem., D-60316 Frankfurt am Main (DE)
(74) Vertreter: Patentanwälte Dr. Solf & Zapf

(56) Entgegenhaltungen:
- DD-A- 262 852
- GB-A- 466 639
- CHEMICAL ABSTRACTS, vol. 102, no. 18, 6. Mai 1985, Columbus, Ohio, US; abstract no. 153851c, T. SEBOEK Seite 286 ;
- CHEMICAL ABSTRACTS, vol. 102, no. 22, 3. Juni 1985, Columbus, Ohio, US; abstract no. 189932u, S. SLANICKA Seite 308 ;

## Beschreibung

Die Erfindung betrifft ein Verfahren zur Verringerung von wasserlöslichem Cr^{VI} in Zementen und/oder zementhaltigen Zubereitungen zur Vermeidung allergischer Reaktionen bei mit den Zementen und/oder zementhaltigen Zubereitungen in Kontakt kommenden Personen (Chromatekzem).

Es ist bekannt, daß wasserlösliches Chromat allergische Reaktionen hervorrufen kann. Außerdem ist bekannt, daß durch Zugabe von Fe(II) Sulfat · H₂O die Gehalte an Cr^{VI} wirksam vermindert werden können. Das Eisensulfat (Fe(II)-Sulfat) reduziert das sechswertige wasserlösliche Chrom (Cr^{VI}) in wäßrigen Zementmischungen zum dreiwertigen Chrom (Cr^{III}), so daß allergische Reaktionen gegen das 6-wertige Chrom unterdrückt werden können (EP 0 125 267 A1, EP 0 160 747 A1, EP 0 160 746 A1, EP 0 133 434 A1, EP 0 054 314 A1).

Eisensulfat verliert bei der Lagerung von Zementen und/oder trockenen zementhaltigen Zubereitungen in handelsüblichen Gebinden seine Wirkung als Reduktionsmittel mit zunehmender Lagerzeit (Verlagerungseffekt). Zudem verursachen lungengängige Eisensulfate fibrogene Veränderungen des Lungengewebes, so daß die Verwendung feingemahlenen Eisensulfates arbeitshygienisch bedenklich erscheint.

In der EP O 524 999 A1 wird vorgeschlagen, Mangansulfat zur Reduzierung des wasserlöslichen Cr^{VI} in Zementleimen, Mörteln und Betonen zu verwenden. Zwar mag durch die Verwendung von Mangansulfat die mögliche gesundheitsschädliche Wirkung des Eisensulfats vermieden sein, ob aber dadurch das Problem der Verlagerung gelöst werden kann, ist zumindest zweifelhaft.

Der Erfindung liegt die Aufgabe zugrunde, ein Verfahren zur Verringerung von wasserlöslichem Chrom^{VI} in einer Wasser/Zement-Mischung unter Verwendung eines Mittels, das in trockenen Zementmischungen zeitlich nahezu unbegrenzt seine Wirkung behält, arbeitshygienisch unbedenklich und kostengünstig erhältlich ist, anzugeben.

Diese Aufgabe wird durch das in Anspruch 1 angegebene Verfahren gelöst. Vorteilhafte Ausgestaltungen dieses Verfahrens sind in den Unteransprüchen angegeben.

Nach der Erfindung werden Ligninsulfonate verwendet. Es ist unkritisch, wann dem Zement und/oder den zementhaltigen Zubereitungen Ligninsulfonat zugesetzt wird. Man kann es zum Beispiel dem Klinker unmittelbar vor oder während der Mahlung, dem gemahlenen Zement vor oder während oder nach dem Mischen einer trockenen Zementmischung oder vor oder während der Wasserzugabe zu einer Frisch-Zementmischung zusetzen; das Ligninsulfonat kann in handelsüblicher trockener Pulverform oder als Lösung zugegeben werden.

In welcher Weise die Ligninsulfonate auf das wasserlösliche Cr^{VI} einwirken, ist letztlich noch nicht geklärt. Es ist ermittelt worden, daß zweckmäßigerweise 300 mg Ligninsulfonat pro mg Cr^{VI} zugesetzt werden sollten unter der Voraussetzung, daß der Zement etwa 0,0005 bis 0,0015 mg, gegebenenfalls sogar bis etwa 0,004 M% wasserlösliches Cr^{VI} im Zement enthält; ist mehr oder weniger wasserlösliches Cr^{VI} vorhanden, können die Ligninsulfonatmengen entsprechend angepaßt zugegeben werden.

Ligninsulfonate sind als Salze der Ligninsulfonsäure bekanntlich Abkömmlinge des im Holz gewachsenen nativen Lignins; sie besitzen eine phenolische Grundstruktur, wobei durch eine Verätherung der phenolischen OH-Gruppe der starke Phenolcharakter überdeckt ist. Als hochmolekulare Naturstoffe sind die Ligninsulfonate polymer uneinheitlich; sie bestehen aus einem Gemisch von Molekülen verschiedener Kondensationsgrade, wobei z. B. die Molekulargewichte der ungereinigten und unveredelten Fichten-Ligninsulfonate zwischen 500 und 50 000 liegen können. Technische Ligninsulfonate aus Buchenholz weisen dagegen nur Molekulargewichte bis etwa 10 000 auf. Durch Veredelungsprozesse werden die Molekulargewichte beeinflußt und abgestellt auf die Verwendung, indem z.B. höhere oder niedrigere Kondensationsgrade eingestellt werden.

Ligninsulfonate werden seit vielen Jahren als Dispergiermittel für Zementmischungen verwendet. Heute sind sie vielfach durch geeignetere, besser wirkende Mittel ergänzt. In Tiefbohr-Zementmischungen werden z.B. Eisen-Ligninsulfonate eingesetzt, die bei hohen Temperaturen die Abbindezeit regeln sollen.

Bekannt ist, daß Ligninsulfonate in Form von Natrium- oder Calcium-Ligninsulfonat in Zementmischungen grundsätzlich verflüssigend und luftporenbildend wirken, sowie die Abbindezeit beeinflussen können, wobei diese Ligninsulfonate hauptsächlich wegen des Verflüssigungseffekts verwendet werden. Die auf dem Markt befindlichen zahlreichen Ligninsulfonat-Typen wie Natrium-, Calcium-, Eisen-, Chromeisen-Ligninsulfonate u.s.w. sind nicht grundsätzlich zur Depression der allergischen Wirkung des wasserlöslichen Cr^{VI} geeignet. Da der Reaktionsmechanismus letztlich noch nicht bekannt ist, muß erfindungsgemäß mit Vorversuchen empirisch geklärt werden, welcher Ligninsulfonat-Typ die Reduktion des wasserlöslichen Cr^{VI} wirksam beeinflußt. Im Rahmen der Erfindung konnte jedoch grundsätzlich festgestellt werden, daß die Eisen-Ligninsulfonate effektiver Cr^{VI} reduzieren als die anderen Ligninsulfonat-Typen, so daß bei gleicher Wirkung geringere Mengen an Eisen-Ligninsulfonat im Vergleich zu anderen Ligninsulfonat-Typen benötigt werden.

Anhand der folgenden Beispiele wird die Erfindung im folgenden näher erläutert.

### Beispiel 1

Jeweils 1 kg Portlandzement dreier Zementsorten 1, 2 und 3 wurden trocken mit Eisen-Ligninsulfonat in unterschiedlichen Mengen versetzt und anschließend mit Wasser gemischt. Danach wurde der Cr^{VI}-Gehalt analytisch ermittelt. Das Ergebnis zeigt die folgende Tabelle I.

**Tabelle I**

| Zement 1 | | Zement 2 | | Zement 3 | |
|---|---|---|---|---|---|
| mg LS*/mgCr^{VI} | Cr^{VI} (M %) | mg LS/mg CR^{VI} | Cr^{VI} (M %) | mg LS/mg Cr^{VI} | Cr^{VI} (M %) |
| 0 | 1,37 ·10⁻³ | 0 | 1,0 ·10⁻³ | 0 | 3,0 ·10⁻³ |
| 73 | 0,77 ·10⁻³ | 100 | 0,6 ·10⁻³ | 33 | 1,93 ·10⁻³ |
| 146 | 0,26 ·10⁻³ | | | 67 | 1,20 ·10⁻³ |
| 219 | 0,009 ·10⁻³ | | | 100 | 0,57 ·10⁻³ |
| 292 | <0,001 ·10⁻³ | 400 | <0,001 ·10⁻³ | 133 | 0,41 ·10⁻³ |
| | | | | 200 | 0,005·10⁻³ |

| | | | | | |
|---|---|---|---|---|---|
| * LS = Ligninsulfonat | | | | | |

Geht man davon aus, daß weniger als 0,1·10⁻³ M% wasserlösliches Cr^{VI} im Zement nach der Literatur anzustreben sind, dann kann festgestellt werden, daß ein Zusatz von 300 mg pro mg Cr^{VI} des erprobten Ligninsulfonats bereits ausreicht, diesen Schwellwert zu unterschreiten.

### Beispiel 2

Wie im Beispiel 1 wurde 1 kg desselben Portlandzements der Zementsorte 2 mit unterschiedlichen Mengen eines Calcium-Ligninsulfonats versetzt. Das Ergebnis zeigt die Tabelle II

**Tabelle II**

| | Cr^{VI} (M %) |
|---|---|
| Zement ohne Zusatz | 1,0 ·10⁻³ |
| Zement mit 100mg LS*2/mg Cr^{VI} | 0,86 ·10⁻³ |
| Zement mit 400mg LS2/mg Cr^{VI} | 0,31 ·10⁻³ |

| | |
|---|---|
| * LS = Ligninsulfonat | |

Es wurde festgestellt, daß zur ausreichenden Depression der allergischen Wirkung des wasserlöslichen Cr^{VI} mehr als 400 mg LS pro mg Cr^{VI} des Ca-Ligninsulfonats zugegeben werden müssen.

### Beispiel 3

1 kg eines anderen Portlandzements, der 1,32·10⁻³ M % wasserlösliches Cr^{VI} enthielt, wurde mit verschiedenen Ligninsulfonat-Typen und Wasser gemischt und anschließend der Cr^{VI}-Gehalt analysiert. Das Ergebnis zeigt die Tabelle III.

**Tabelle III**

| | mit 76mg LS/mg Cr^{VI} Cr^{VI} (M %) | mit 300mg LS/mg Cr^{VI} Cr^{VI} (M %) |
|---|---|---|
| LS*1 | 1,05·10⁻³ | 0,25·10⁻³ |
| LS 2 | 1,09·10⁻³ | 0,31·10⁻³ |
| LS 3 | 1,06·10⁻³ | 0,60·10⁻³ |
| LS 4 | 0,93·10⁻³ | 0,23·10⁻³ |
| LS 5 | 0,73·10⁻³ | 0,01·10⁻³ |
| LS 6 | 0,74·10⁻³ | 0,06·10⁻³ |
| LS 7 | 0,67·10⁻³ | 0,07·10⁻³ |

| | | |
|---|---|---|
| * LS = Ligninsulfonat LS 1: Calcium-Ligninsulfonat LS 2: Natrium-Ligninsulfonat LS 3: Natrium-Ligninsulfonat LS 4: Eisenchrom-Ligninsulfonat LS 5: Eisen-Ligninsulfonat LS 6: Calcium-Ligninsulfonat LS 7: Natrium-Ligninsuflonat | | |

Gemäß Tabelle III sind die Ligninsulfonate 5, 6 und 7 bei Mengen von 300mg LS/mg Cr^{VI} in der erwünschten Weise wirksam, indem der Cr^{VI}-Wert unter die Grenze von 0,1·10⁻³ M% wasserlösliches Cr^{VI} des Zementes gebracht werden kann.

Sofern der Zement oder die zementhaltige Zubereitung bereits Ligninsulfonate zu anderen Zwecken enthält ist zu prüfen, ob und inwieweit diese Ligninsulfonate die schädliche Wirkung des wasserlöslichen Cr^{VI} beeinflussen können. Gegebenenfalls sind zur Depression der allergischen Wirkung erfindungsgemäß zusätzliche Mengen eines entsprechend wirksamen Ligninsulfonats zuzusetzen.

Den durch die erfindungsgemäße Verwendung des Ligninsulfonats gegebenenfalls auftretenden Nebeneffekten, wie der verflüssigenden und/oder luftporenbildenden und/oder die Abbindezeit beeinflussenden Wirkung, kann mit geeigneten Mitteln gegengesteuert werden. Derarte Mittel sind bekannt. Z.B. kann die verflüssigende Wirkung des Ligninsulfonats durch den Zusatz von Feinststoffen eliminiert werden. Dabei ist zu beachten, daß nicht jedes Ligninsulfonat verflüssigend wirkt. In jedem Einzelfall ist daher zu prüfen, ob eine verflüssigende Wirkung eintritt und mit welchen Mengen an Feinststoffen gegengesteuert werden muß. Beispielsweise kann bei Verwendung des Ligninsulfonats LS 1 gemäß Tabelle III ein Zusatz von etwa 10 M% Microsilica, bezogen auf das Zementgewicht, die verflüssigende Wirkung kompensieren. Bei Verwendung des LS 3 gemäß Tabelle III genügen 5 M% Microsilica, um die verflüssigende Wirkung des Ligninsulfonats auszugleichen. Beim Eisen-Ligninsulfonat LS 5 gemäß Tabelle III stellt sich keine verflüssigende Wirkung ein, so daß ein Rheologieausgleich mit Feinststoffen nicht erforderlich ist.

### Beispiel 4

Aus dem folgenden Beispiel ergibt sich, daß man die Wirkung des Ligninsulfonats auch erzielt, wenn man bereits auf dem Markt befindlichen Produkten das Ligninsulfonat bei der Wasserzugabe beimengt. An zwei Baustoffen, einem Fliesenkleber und einem Fugenmörtel, wurde das wasserlösliche Cr^{VI} vor und nach dem Zusatz von Eisen-Ligninsulfonat LS 5 gemäß Tabelle III bestimmt. Das Ergebnis ergibt sich aus der folgenden Tabelle IV:

**Tabelle IV**

| Fliesenkleber | | Fugenmörtel | |
|---|---|---|---|
| mg LS*/mgCr^{VI} | Cr^{VI} (M %) | mg LS/mg Cr^{VI} | Cr^{VI} (M %) |
| 0 | 0,5 ·10⁻³ | 0 | 0,35 ·10⁻³ |
| 200 | 0,23 ·10⁻³ | 286 | 0,1 ·10⁻³ |
| 400 | 0,05 ·10⁻³ | 571 | 0,05 ·10⁻³ |

| | | | |
|---|---|---|---|
| * LS = Ligninsulfonat | | | |

Zementhaltige Zubereitungen im Sinne der Erfindung sind z.B. Mörtel, Fliesenkleber, Fugenmörtel, Betone, Putze oder dergleichen.

## Patentansprüche

1. Verfahren zur Verringerung von wasserlöslichem Cr^{VI} in Zementen und/oder zementhaltigen Zubereitungen,
**dadurch gekennzeichnet,**
daß in Vorversuchen ein Ligninsulfonat aus einer Vielzahl von auf dem Markt befindlichen Ligninsulfonaten ermittelt wird, das den wasserlöslichen Cr^{VI}-Gehalt bei Zutritt von Wasser zu einem Zement und/oder zu einer zementhaltigen Zubereitung unter die Grenze von 0,1 · 10⁻³ M% wasserlösliches Cr^{VI} vermindert, und dieses ausgewählte Ligninsulfonat Zementen und/oder zementhaltigen Zubereitungen vor oder während der Wasserzugabe zur Herstellung von Frisch-Zement-Mischungen zusetzt.

2. Verfahren nach Anspruch 1,
dadurch **gekennzeichnet,**
daß ein Eisen-Ligninsulfonat verwendet wird.

3. Verfahren nach Anspruch 2,
dadurch **gekennzeichnet,**
daß das Eisen-Ligninsulfonat in Mengen von 200 bis 400 mg /mg Cr^{VI} zugesetzt wird.

4. Verfahren nach Anspruch 1,
dadurch **gekennzeichnet,**
daß ein Calcium-Ligninsulfonat verwendet wird.

5. Verfahren nach Anspruch 4,
dadurch **gekennzeichnet,**
daß das Calcium-Ligninsulfonat in Mengen von 200 bis 500 mg /mg Cr^{VI} verwendet wird.

6. Verfahren nach einem oder mehreren der Ansprüche 1 bis 6,
dadurch **gekennzeichnet,**
daß zusätzlich feinteilige, wasserbindende Zusatzstoffe zur Kompensation der verflüssigenden Wirkung der Ligninsulfonate zugesetzt werden.

7. Verfahren nach Anspruch 6,
dadurch **gekennzeichnet,**
daß 1 bis 10 M% feinteilige Kieselsäure (Microsilica) bezogen auf den Zementgehalt zugesetzt werden.

8. Verfahren nach Anspruch 6 und/oder 7,
dadurch **gekennzeichnet,**
daß 1 bis 20 M% feinteiliges Calciumcarbonat bezogen auf den Zementgehalt zugesetzt werden.

9. Verfahren nach einem oder mehreren der Ansprüche 1 bis 8,
dadurch **gekennzeichnet,**
daß ein an sich bekannter Erstarrungsbeschleuniger zugesetzt wird.

10. Verfahren nach Anspruch 9,
dadurch **gekennzeichnet,**
daß als Erstarrungsbeschleuniger Calciumformiat zugesetzt wird.

11. Verfahren nach einem oder mehreren der Ansprüche 1 bis 10,
dadurch **gekennzeichnet,**
daß das Ligninsulfonat vor oder während der Mahlung des Zementklinkers zugesetzt wird.

## Claims

1. A method for decreasing water-soluble Cr^{VI} in cements and/or cement-containing preparations,
characterised in that,
in preliminary tests a lignosulphonate is identified from a multiplicity of lignosulphonates available on the market, which on addition of water to a cement and/or to a cement-containing preparation, lowers the water-soluble Cr^{VI} content below the limit of 0.1 x 10⁻³ M% of water-soluble CR^{VI}, and this selected lignosulphonate is added to cements and/or cement-containing preparations before or during the addition of water to produce fresh cement mixtures.

2. A method according to Claim 1,
characterised in that,
a ferrous lignosulphonate is used.

3. A method according to Claim 2,
characterised in that,
the ferrous lignosulphonate is added in quantities of 200 to 400 mg/mg Cr^{VI}.

4. A method according to Claim 1,
characterised in that,
a calcium lignosulphonate is used.

5. A method according to Claim 4,
characterised in that,
the calcium lognosulphonate is added in quatities of 200 to 500 mg/mg Cr^{VI}.

6. A method according to one or more of Claims 1 to 5,
characterised in that,
finely-divided water-binding additives are additionally added to compensate for the liquefying effect of the lignosulphonates.

7. A method according to Claim 6,
characterised in that,
1 to 10 M% of finely-divided silicic acid (microsilica) in relation to the cement content is added.

8. A method according to Claim 6 and/or claim 7,
characterised in that,
1 to 20 M% of finely-divided calcium carbonate in relation to the cement content is added.

9. A method according to one or more of Claims 1 to 8,
characterised in that,
a setting accelerator known per se is added.

10. A method according to Claim 9,
characterised in that,
calcium formate is added as setting accelerator.

11. A method according to one or more of Claims 1 to 10,
characterised in that,
the lignosulphonate is added before or during the grinding of the cement clinker.

## Revendications

1. Procédé pour diminuer la teneur en CR^{VI} hydrosoluble dans des ciments et/ou dans des préparations contenant du ciment, caractérisé en ce que,
dans des essais préalables, on détermine un sulfonate de lignine parmi une multitude de sulfonates de lignine disponibles sur le marché, qui diminue la teneur en CR^{VI} hydrosoluble lors de l'addition d'eau à un ciment et/ou à une préparation contenant du ciment, pour atteindre une teneur inférieure à la limite de 0,1.10⁻³ mole % de CR^{VI} hydrosoluble, et on ajoute ce sulfonate de lignine sélectionné à des ciments et/ou à des préparations contenant du ciment avant ou pendant l'addition d'eau pour la préparation de mélanges de ciments fraîchement préparés.

2. Procédé selon la revendication 1, caractérisé en ce qu'on utilise un sulfonate de lignine de fer.

3. Procédé selon la revendication 2, caractérisé en ce que le sulfonate de lignine de fer est ajouté dans des quantités de 200 à 400 mg/mg de CR^{VI}.

4. Procédé selon la revendication 1, caractérisé en ce qu'on utilise un sulfonate de lignine de calcium.

5. Procédé selon la revendication 4, caractérisé en ce qu'on utilise le sulfonate de lignine de calcium dans des quantités de 200 à 500 mg/mg de CR^{VI}.

6. Procédé selon une ou plusieurs des revendications 1 à 5, caractérisé en ce qu'on ajoute en outre des additifs liant l'eau, finement divisés pour compenser l'effet liquéfiant des sulfonates de lignine.

7. Procédé selon la revendication 6, caractérisé en ce qu'on ajoute de 1 à 10 moles % d'acide silicique finement divisé (microsilice), rapportés à la teneur en ciment.

8. Procédé selon les revendications 6 et/ou 7, caractérisé en ce qu'on ajoute de 1 à 20 moles % de carbonate de calcium finement divisé, rapportés à la teneur en ciment.

9. Procédé selon une ou plusieurs des revendications 1 à 8, caractérisé en ce qu'on ajoute un accélérateur de la prise connu en soi.

10. Procédé selon la revendication 9, caractérisé en ce qu'on ajoute comme accélérateur de la prise du formiate de calcium.

11. Procédé selon une ou plusieurs des revendications 1 à 10, caractérisé en ce qu'on ajoute le sulfonate de lignine avant ou pendant le broyage du clinker.
